# EUROPÄISCHE PATENTSCHRIFT

(11) **EP 0 949 953 B1**
(45) Veröffentlichungstag und Bekanntmachung des Hinweises auf die Patenterteilung: **16.08.2001**
(21) Anmeldenummer: 97941133.7
(22) Anmeldetag: 05.09.1997
(51) Int. Cl.: B01D 35/30, F16M 7/00, B01D 24/10

(54) **GEMEINSAMER SOCKEL FÜR EINEN FILTERBEHÄLTER UND EINE PUMPE**
COMMON BASE FOR A FILTER CONTAINER AND A PUMP
SOCLE COMMUN POUR UN CONTENANT DE FILTRE ET UNE POMPE

(30) Priorität: 25.09.1996 DE 19639262
(43) Veröffentlichungstag der Anmeldung: 20.10.1999
(73) Patentinhaber: WTS Kereskedelmi Es Szolgaltato Korlatolt Felelösségü Tarsasag, 1223 Budapest (HU)
(72) Erfinder: FICSOR, Istvan, H-2049 Diòsd (HU)
(74) Vertreter: Vomberg, Friedhelm, Dipl.-Phys.
(86) Internationale Anmeldenummer: IB9701059
(87) Internationale Veröffentlichungsnummer: WO9813122

(56) Entgegenhaltungen:
- DE-U- 29 606 418
- US-A- 2 064 259

## Beschreibung

Die Erfindung betrifft einen Sockel für einen Filterbehälter und eine Pumpe zur Förderung von den Filterbehälter durchlaufenden Flüssigkeiten.

Filterbehälter der eingangs genannten Art sind nach dem Stand der Technik bekannt, beispielsweise aus der DE-U1-93 20 039.0, DE-U1-94 01 249.0 bzw. WO 95/17940 oder DE-U1-94 09 696.1. Die betreffenden Behälter sind kesselförmig ausgebildet und besitzen einen Wassereinlaß und einen Wasserauslaß, worüber das zu filternde Wasser, das beispielsweise aus Schwimmbädern oder dergleichen entnommen ist, mittels einer Pumpe geleitet wird. In dem Filterbehälterinnenraum ist geeignetes Filtermaterial, z.B. Sand, Aktivkohle, Silikat oder ähnliches angeordnet, worüber Wasser-Verunreinigungen, Trübstoffe, kolloide Stoffe sowie Mikroorganismen ausgefiltert werden können. Zur Fixierung des Abstandes der Pumpe zu dem Filterbehälter ist es wünschenswert, wenn nicht aufgrund der gewählten Rohranschlüsse zur Vermeidung von Zug- und Druckspannungen, die zu Brüchen führen können, erforderlich, einen gemeinsamen Sockel zu wählen. Die nach dem Stand der Technik gewählten Sockel benötigen entweder eine große Standfläche, um je nach vorhandenen Rohranschlüssen die relative Lage der Pumpe zum Filterbehälter ausrichten zu können, oder müssen der jeweiligen Form des Filterbehälters und der Pumpe unter Berücksichtigung der vorhandenen Rohranschlüsse angepaßt sein. Bei einem Pumpen- oder Filterbehälteraustausch ergeben sich aufgrund etwaiger dort vorhandener Rohranschlußstutzen Anschlußprobleme, die nur mittels Rohradapterstücken oder durch kompletten Austausch des Sockels, wenn überhaupt, lösbar sind.

Es ist daher Aufgabe der vorliegenden Erfindung, einen gemeinsamen Sockel für den Filterbehälter sowie die Pumpe zu schaffen, der eine möglichst kleine Stellfläche benötigt und der im Hinblick auf die relative Ausrichtung der Pumpe bzw. der Pumpenanschlüsse flexibel handhabbar ist.

Diese Aufgabe wird durch den Sockel nach Anspruch 1 gelöst.

In Abkehr von den einstückigen, nach dem Stand der Technik bekannten Sockelausbildungen ist erfindungsgemäß der Sockel mehrteilig und besteht aus einem ersten, dem Filterbehälterboden angepaßten Filtersockel und einem zweiten Sockelarm. Dieser Sockelarm steht radial horizontal von dem Filtersockel ab und besitzt eine der Pumpemgröße angepaßte Stell- und Aufnahmefläche. Umfangsseitig weist der Filtersockel mehrere Teil einer lösbaren Verbindung darstellende Aufnahmen für korrespondierende Befestigungsmittel des dort befestigbaren Endes des Sockelarmes auf. Die umfangsseitig vorhandenen Aufnahmen ermöglichen Wahlweise eine beliebige, den Anschlußstutzen des Filterbehälters und der Pumpe anpaßbare Ausrichtungen des Sockelarmes. Die erfindungsgemäß mögliche Radialausrichtung des Sockelarmes, dessen Stellfläche entsprechend der Pumpe klein gewählt werden kann, schafft insbesondere den Vorteil, daß die gesamte Sockel-Stellfläche entsprechend minimiert werden kann. Im Sinne der vorliegenden Erfindung kann auf sämtliche nach dem Stand der Technik bekannten lösbaren Verbindungen zurückgegriffen werden, die eine wahlweise Radialausrichtung des Sockelarmes, ggf. in diskreten Winkelabständen von z.B. 10°, oder beliebigen Winkelabständen gestatten.

Vorzugsweise besteht die betreffende Aufnahme des Filtersockels jedoch aus einem umlaufenden Profil, das beispielsweise eine umlaufende Nut zum lösbaren Einstecken, Einschieben, Aufschieben oder Aufstecken von hakenförmigen Befestigungsmitteln des Sockelarmes (oder umgekehrt) ist. Vorzugsweise bietet es sich an, daß der Filtersockel im Horizontalquerschnitt zumindest im Bereich der genannten Aufnahme kreisrund ist.

Nach einer weiteren Ausgestaltung der Erfindung besitzt der Sockelarm in einer Draufsicht betrachtet eine zumindest im wesentlichen trapez- oder kreissektorartig ausgeführte Form, die an ein Tortenstück erinnert.

Nach einer weiteren Ausgestaltung der Erfindung ist die Filtersockel-Aufnahme im Abstand zum Filtersockelboden, vorzugsweise als Rastverbindung angeordnet.

Nach einer Weiterentwicklung der Erfindung ist es ferner möglich, mit dem Filtersockel mehrere Sockelarme zu verbinden, auf denen unterschiedliche Geräte radial ausgerichtet abgestellt werden können. Solche Geräte sind außer der bereits erwähnten Pumpe Heizgeräte und/oder Chlordosierungsgeräte oder ähnliches. Auch hierbei kann entsprechend den unterschiedlichen, zum Teil herstellerbedingten Rohranschlüssen der Sockelarm stets geeignet ausgerichtet werden.

Ein Ausführungsbeispiel der Erfindung ist in den Zeichnungen dargestellt. Es zeigen
- Fig. 1: eine Seitenansicht eines erfindungsgemäßen Sockels mit darauf abgestellter Pumpe und darauf abgestelltem Filterbehälter,
- Fig. 2: eine Draufsicht auf den erfindungsgemäßen Sockel mit Andeutung möglicher Sockelarm-Ausrichtung und
- Fig. 3, 4: jeweils Draufsichten auf einen erfindungsgemäßen Sockel mit mehreren Sockelarmen.

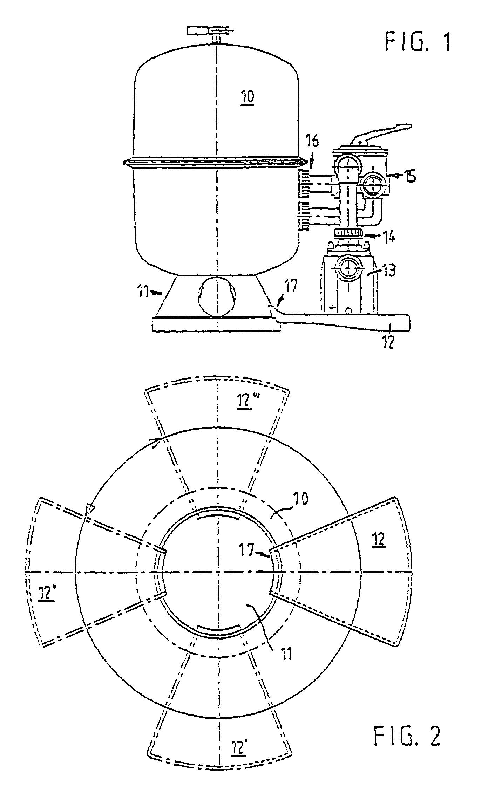

Die in Fig. 1 dargestellte Anordnung zeigt einen Filterbehälter 10, der bodenseitig auf einem kegelstumpfförmigen Filtersockel 11 abgestützt ist. Mit diesem Filtersockel 11 ist ein radial horizontal abstehender Sockelarm 12 lösbar verbunden, auf dem eine Pumpe 13 abgestellt ist. Der Sockelarm 12 ist in bezug auf den Filtersockel 11 so ausgerichtet, daß der Pumpenanschlußstutzen 14 ohne Zuhilfenahme von Adapterstücken an das Rohrleitungssystem 15, das mit Ein- und Auslaßstutzen 16 am Filterbehälter befestigt ist, angeschlossen werden kann.

Die Verbindung 17 zwischen dem Filtersockel 11 und dem Sockelarm 12 kann als beliebige, jedoch lösbare und vorzugsweise in jedem Winkelmaß einstellbare Verbindung ausgebildet sein, insbesondere als Rast-, Schnapp- oder Steckverbindung, wobei eines der Teile 11, 12 entsprechende Ausnehmungen und das andere Teil hierzu korrespondierende Erhebungen, Noppen etc. hat. Denkbar ist auch ein Schwalbenschwanz-Rippenprofil, das klammernd von einem entsprechenden Profil des anderen Teiles umgriffen wird. Eine derart gestaltete lösbare Verbindung schafft, wie aus Fig. 2 ersichtlich, den Vorteil, daß der Sockelarm 12 nicht nur in der mit durchgezogenen Begrenzungen dargestellten Stellung in bezug auf den Filtersockel 11, sondern auch in anderen Positionen 12', 12", 12"', die im vorliegenden Fall um jeweils 90° versetzt sind, ausgerichtet werden kann. In der Draufsicht betrachtet besitzt der Sockelarm 12 zwei gerade, nach außen divergierend verlaufende Seiten sowie als ebenfalls gegenüberliegende Seiten teilkreisförmig ausgebildete Seitenstücke. Im vorliegenden Fall stehen die geradlinigen Seiten eines Sockelarmes unter einem Winkel von 45° zueinander, so daß sich die betreffenden Seitenverlängerungen etwa im Zentrum des Filtersockels 11 schneiden.

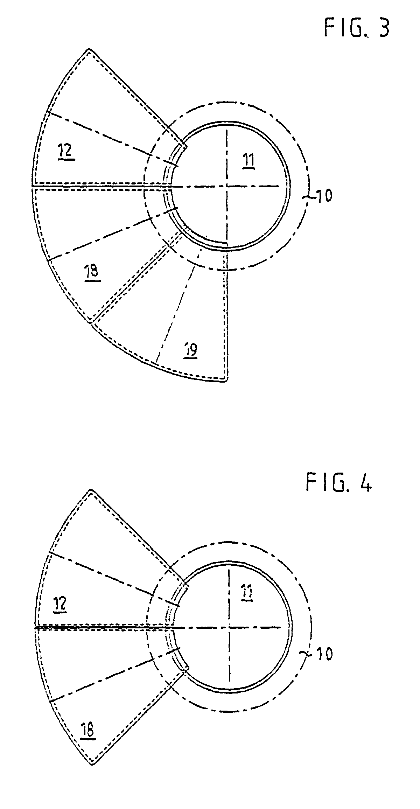

Fig. 3 zeigt den Filtersockel 11 in Verbindung mit drei Sockelarmen 12, 18, 19, die nebeneinanderliegend angeordnet sind und wovon jeder über eine entsprechende lösbare Befestigung mit dem Filtersockel 11 verbunden ist. Im vorliegenden Fall bilden die Sockelarme 12, 18 und 19 eine über ein Winkelmaß von insgesamt 135° reichende Teilkreis-Stellfläche, auf der neben der Pumpe 13 noch weitere Geräte, wie Heizungen, Chlordosierungsgeräte etc. abstellbar sind. Die Kombination eines Filtersockels 11 mit nur zwei Sockelarmen 12, 18 zeigt Fig. 4.

Selbstverständlich sind im Rahmen der vorliegenden Erfindung auch Variationen dergestalt möglich, daß die Sockelarme 12, 18 bzw. 12, 18 und 19 im Winkelabstand zueinander, gegenüberliegend oder unter verschiedenen Drehwinkelmaßen zueinander angeordnet sind, je nachdem, wie die betreffenden Anschlüsse am Filterbehälter 10, der Pumpe 13 und/oder weiterer Geräte dies erfordern oder auch nur zweckmäßig erscheinen lassen.

## Patentansprüche

1. Sockel für einen Filterbehälter (10) und eine Pumpe (13) zur Förderung von den Filterbehälter (10) durchlaufenden Flüssigkeiten,
**dadurch gekennzeichnet,**
daß der Sockel mehrteilig ausgebildet ist und aus einem ersten, dem Filterbehälterboden angepaßten Filter-sockel (11) und einem zweiten, von dem Filtersockel radial horizontal abstehenden Sockelarm (12) mit einer Aufnahmefläche für die Pumpe (13) besteht, wobei der Filtersockel (11) umfangsseitig mehrere Teil einer lösbaren Verbindung (17) darstellende Aufnahmen für korrespondierende Befestigungsmittel des dort befestigbaren Endes des Sockelarmes (12) aufweist.

2. Sockel nach Anspruch 1, dadurch gekennzeichnet, daß die Aufnahme des Filtersockels (11) ein umlaufendes Profil, vorzugsweise eine umlaufende Nut zum lösbaren Einstecken, Einschieben, Aufschieben oder Aufstecken von hakenförmigen Befestigungsmitteln des Sockelarmes (12) ist.

3. Sockel nach Anspruch 1 oder 2, dadurch gekennzeichnet, daß der Filtersockel (11) im Horizontalquerschnitt zumindest im Bereich der Aufnahme kreisrund ist.

4. Sockel nach einem der Ansprüche 1 bis 3, dadurch gekennzeichnet, daß der Sockelarm (12) in einer Draufsicht betrachtet im wesentlichen trapez- oder kreissektorförmig ausgebildet ist.

5. Sockel nach einem der Ansprüche 2 bis 4, dadurch gekennzeichnet, daß die Filtersockelaufnahme im Abstand zum Filtersockelboden, vorzugsweise als Rastverbindung angeordnet ist.

6. Sockel nach einem der Ansprüche 1 bis 5, dadurch gekennzeichnet, daß radial vom Filtersockel (11) abstehend mehrere Sockelarme (12, 18, 19) zur Aufnahme unterschiedlicher Geräte, wie einer Pumpe (13), einer Heizung und/oder einem Chlordosierungsgerät, befestigt sind.

## Claims

1. Base for a filter container (10) and a pump (13) for displacing liquids that flow through the filter container (10),
**characterized in that**
the base is composed of several parts and consists of a first filter base (11) adapted to the bottom of the filter container and of a second base arm (12) which extends horizontally from the filter base in radial direction and has a surface for supporting the pump, whereby the filter base (11) has several cavities around its circumference which constitute parts of a detachable connecting system and which receive matching fastening means arranged at the end of the base arm (12) for fastening the base arm to the filter base.

2. Base according to claim 1, characterized in that the cavity of the filter base (11) is a circumferential profile, preferably a circumferential groove for a detachable inserting, introducing, putting over or putting onto hooked fastening means of the base arm (12).

3. Base according to claim 1 or 2, characterized in that the horizontal cross section of the filter base (11) is circular at least in its supporting area.

4. Base according to one of the claims 1 to 3, characterized in that the base arm (12) seen in a top view is formed trapezoidal or circular.

5. Base according to one of the claims 2 to 4, characterized in that the filter base cavity is arranged in a distance to the filter base bottom and the filter base cavity is preferably part of snap-fastening means.

6. Base according to one of the claims 1 to 5, characterized in that several base arms (12, 18, 19) which extend radially from the filter base (11) are provided for supporting different devices as a pump (13), a heating and/or a device for measure out a dose of chlorine.

## Revendications

1. Socle pour un réservoir de filtre (10) et une pompe (13) destinée à refouler des liquides passant à travers le réservoir de filtre (10),
**caractérisé par le fait**
que ledit socle est composé de plusieurs parties et se compose d'un premier socle de filtre (11) adapté au fond du réservoir de filtre et d'un deuxième bras de socle (12) qui est en saillie radiale horizontale dudit socle de filtre et qui présente une surface de réception pour la pompe (13), ledit socle de filtre (11) présentant sur la périphérie plusieurs logements pour des moyens correspondants de fixation de l'extrémité du bras de socle (12) qui y peut être fixée, ces logements constituant une partie d'une jonction amovible (17).

2. Socle selon la revendication 1, caractérisé par le fait que le logement du socle de filtre (11) est un profil periphérique, de préférence une rainure périphérique destinée à y introduire, introduire en glissant, rapporter en glissant ou rapporter respectivement de manière amovible des moyens de fixation en forme de crochet du bras de socle (12).

3. Socle selon la revendication 1 ou 2, caractérisé par le fait que, en coupe transversale horizontale, ledit socle de filtre (11) est circulaire, au moins dans la zone du logement.

4. Socle selon l'une des revendications 1 à 3, caractérisé par le fait que le bras de socle (12) présente, vu dans une vue de dessus, pour l'essentiel une forme trapézoïdale ou une forme de secteur de cercle.

5. Socle selon l'une des revendications 2 à 4, caractérisé par le fait que le logement du socle de filtre est disposé à distance du fond du socle de filtre, de préférence comme assemblage à encliquetage.

6. Socle selon l'une des revendications 1 à 5, caractérisé par le fait que plusieurs bras de socle (12, 18, 19) qui sont en saillie radiale du socle de filtre (11) sont fixés à ce dernier pour recevoir des appareils différents, tels qu'une pompe (13), un chauffage et/ou un appareil de dosage de chlore.
